# EUROPÄISCHE PATENTSCHRIFT

(11) **EP 0 840 024 B1**
(45) Veröffentlichungstag und Bekanntmachung des Hinweises auf die Patenterteilung: **29.05.2002**
(21) Anmeldenummer: 97112832.7
(22) Anmeldetag: 25.07.1997
(51) Int. Cl.: F16C 27/06

(54) **Gedämpftes Wälzlager**
Damped rolling bearing
Palier à roulement amorti

(30) Priorität: 05.11.1996 DE 19645530
(43) Veröffentlichungstag der Anmeldung: 06.05.1998
(73) Patentinhaber: Carl Freudenberg KG, 69469 Weinheim (DE)
(72) Erfinder: Bade, Karl-Heinz, 69483 Waldmichelbach (DE)

(56) Entgegenhaltungen:
- EP-A- 0 124 643
- EP-A- 0 431 506
- DE-A- 1 575 374
- DE-A- 4 023 183
- US-A- 2 244 197
- US-A- 2 295 139
- US-A- 2 674 505

## Beschreibung

### Technisches Gebiet

Wälzlager zur radialen Lagerung zweier Bauteile sind geläufige Maschinenelemente, die in vielfältigen Varianten im Maschinenbau zur Anwendung kommen. Bei der Auslegung dieser Lager sind die Belastungen der Bauteile, insbesondere auch die durch Schwingungen erzeugten Spitzenbelastungen, von besonderer Bedeutung. Daher besteht das Bedürfnis, diese Schwingungen zu dämpfen. Dies geschieht mit einer zwischen dem Lager und einem Bauteil angeordneten Dämpfungsauflage.

### Stand der Technik

Der innerbetriebliche Stand der Technik zur Herstellung schwingungsgedämpfter Lagereinheiten besteht darin, herkömmliche Lager mittels der elastomeren Dämpfungsauflage durch Vulkanisation mit dem Lagerträger zu verbinden. Aufgrund der zur Durchführung der Vulkanisation notwendigen hohen Temperaturen bereitet der Einsatz von dauergeschmierten Lagern aber besondere Probleme, da das Gleitmittel über die normale Betriebstemperatur des Lagers hinaus erwärmt wir und die Abdeckscheiben des Lagers nicht mehr dicht sind. Daher ist allein aufgrund des Herstellungsprozesses der Einsatz von hochwertigen, besonders abgedichteten Lagern erforderlich, um eine schwingungsgedämpfte Lagereinheit herzustellen.

Die DE-A-4 023 183 offenbart ferner ein Wälzlager gemäß der Oberbegriff des Anspruchs 1, beiden die Dämpfungsauflage angeheltet bzw. angeklebt ist.

Das Ziel der Erfindung besteht dengegenüter darin, auf einFache Weise ein Wälzlager zu schaffen, mit welchem eine elastische Lagerung möglich ist, z. B. ohne besonders abgedichtete, dauergeschmierte Wälzlager verwenden zu müssen.

### Darstellung der Erfindung

Erfindungsgemäß weist der Laufring eine dem Bauteil zugewandte Außenkontur und das Bauteile eine dem Laufring zugewandte, der Außenkontur im wesentlichen entsprechende Innenkontur auf, welche gegenüber einer zylindrischen Außenkontur zumindest abschnittsweise, vorzugsweise im Bereich der Wälzkörper, einen Dickenzuwachs darstellt, wobei die Außenkontur dergestalt ist, daß eine Pendelbewegung des Lagers oder des Bauteils unter Verformung der Dämpfungsauflage höchstens bis zu einem Anschlag ausführbar ist.

Ein dergestalt ausgebildetes Wälzlager hat den Vorteil, daß die Dämpfungsauflage zwischen das Lager und das Bauteil unter Vorspannung eingepreßt werden kann, wobei durch den Reibschluß und den angedeuteten Formschluß das Herauswandern der Dämpfungsauflage verhindert wird. Von besonderer Bedeutung ist hierbei die Absicherung des Lagers gegen Pendelbewegungen, da diese ein Herausarbeiten der Dämpfungsauflage bewirken könnten.

Als Außenkontur kommt beispielsweise eine Dachform aus zwei zumindest abschnittsweise gegeneinander gerichteten Kegelflächen in Betracht, aber auch eine Außenkontur mit zumindest teilweise kreisbogenförmigen Abschnitten.

Vorzugsweise hat der Spalt zwischen dem Lager und dem Bauteil eine konstante Dicke und ist im wesentlichen vollständig durch die Dämpfungsauflage ausgefüllt.

Vorzugsweise ist die Dicke der Dämpfungsauflage konstant.

Die Weiterbildung des Lagers mit seitlich der Wälzkörper vorgesehenen Abdeckscheiben, die ein Heraustreten eines Gleitmittels verhindern, zeigt einen besonders vorteilhaften Anwendungsfall auf, da gerade hier die Probleme der bislang aufgrund der Vulkanisation auftretenden hohen Temperaturen sich besonders nachteilig erwiesen.

### Kurzbeschreibung der Zeichnung

Anhand der Zeichnung sind verschiedene Ausführungen der Erfindung näher erläutert. Es zeigen die:
- Fig. 1: ein Wälzlager mit dachförmiger Außenkontur, die
- Fig. 2: ein Wälzlager mit abschnittsweise sphärischer Außenkontur und die
- Fig. 3: ein Wälzlager mit nur abschnittsweiser dachförmiger Außenkontur.

### Ausführung der Erfindung

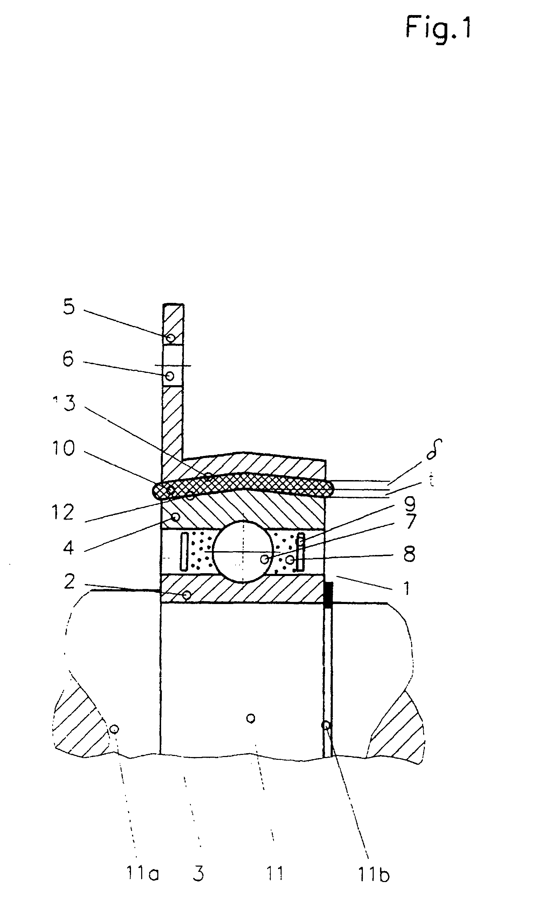

In Fig. 1 ist als Beispiel für ein Wälzlager ein Rillenkugellager 1 dargestellt, welches mit einem inneren Laufring 2 auf einer Welle 3 als erstes Bauteil und mit einem äußeren Laufring 4 in einem Lagerhalter 5 als zweitem Bauteil gelagert ist. Der Lagerhalter 5 weist eine Öffnung 6 auf, durch welche nicht dargestellte Verbindungsmittel zur Befestigung an einem Motorgehäuse oder ähnlichem gesteckt werden können.

Das Rillenkugellager weist als Kugeln 7 ausgebildete Wälzkörper auf, die zwischen dem inneren Laufring 2 und dem äußeren Laufring 4 angeordnet sind. Die Schmierung dieser Kugeln 7 erfolgt über ein Gleitmittel 8, welches durch Dichtscheiben 9 zu beiden Seiten der Kugeln 7 am Austreten aus dem Lager 1 gehindert wird. Dadurch wird eine Dauerschmierung des Lagers 1 gewährleistet.

Zwischen dem Lagerträger 5 und dem äußeren Laufring 4 befindet sich eine Dämpfungsauflage 10 aus elastomerem Material, welche sich über die gesamte axiale Breite des Lagers erstreckt. Die Dämpfungsauflage 10 ist unter Vorspannung eingepreßt und reibschlüssig mit dem Laufring 4 und dem Lagerträger 5 verbunden

Der innere Laufring 2 ist auf einem Wellenabsatz 11 in axialer Richtung gegen einen Wellenabsatz 11 a beziehungsweise einen Sicherungsring 11b gelagert.

Der äußere Laufring 4 weist eine Außenkontur 12 in Form eines Daches auf, d.h. einen von einer Seite des Lagers 1 zur Mitte des Lagers 1 hin um den Betrag t stetig ansteigenden Außendurchmesser, der sich von der Mitte bis zur gegenüberliegenden Seite wieder verringert. Dabei liegt in der Mitte der Außenkontur 12 eine Umlenkstelle 12' vor, wobei zwecks Einpressen der Dämpfungsauflage an der Umlenkstelle 12' ein Radius vorgesehen ist. Der Abstand zwischen der Außenkontur 12 des äußeren Laufrings und der Innenkontur 13 des Lagerhalters 5 ist im wesentlichen konstant, da dessen Innenkontur 13 der Außenkontur 12 des äußeren Lagerrings 4 entsprechend ausgebildet ist.

Die Konturierung ist so bemessen, daß der größte Außendurchmesser des äußeren Lagerrings 4 kleiner als der kleinste Innendurchmesser des Lagerhalters 5 ist, so daß eine Montageluft δ vorliegt und ein axiales Zusammenschieben problemlos möglich ist. Weiterhin ist die Konturierung dergestalt, daß einer Pendelbewegung des Lagers 1 entgegengewirkt wird. Mit der Außenkontur 12 in Fig. 1 wird dies dadurch erreicht, daß bei einer Pendelbewegung des Lagers die Dämpfungsschicht 10 bei zunehmender Verformung eine erhöht Kraft benötigt wird und schließlich ein Anschlag erreicht wird. Ein Herausarbeiten der Dämpfungsschicht 10 ist wegen der einen Formschluß bewirkenden Umlenkstelle 12' in der Mitte nicht möglich.

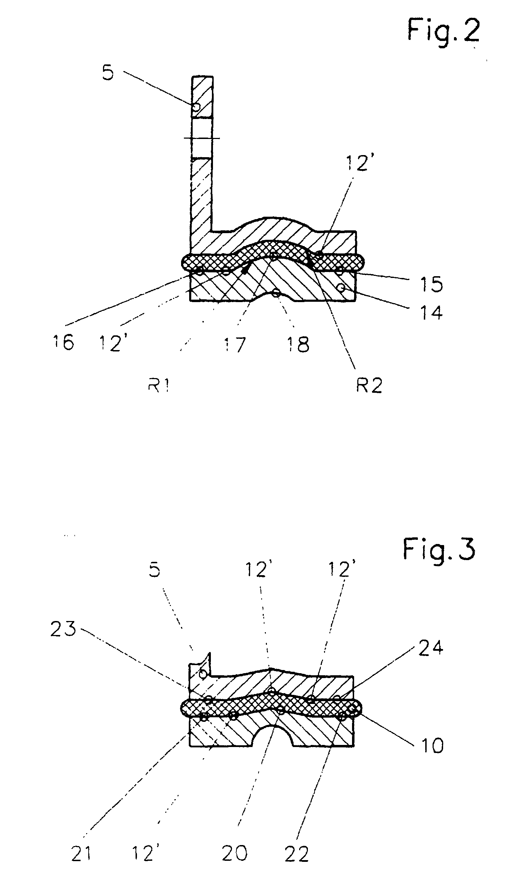

In Fig. 2 ist eine weitere Außenkontur dargestellt. Der äußeren Lagerring 14 weist eine aus drei Abschnitten bestehende Außenkontur auf. Die Abschnitte sind seitlich angeordnete zylindrische Flächen 15, 16 und eine dazwischenliegend angeordnete sphärische Fläche 17 mit einem Radius R₁. Diese sphärische Fläche 17 liegt der Laufbahn 18 gegenüber und ist in der Lageraufnahme 5 mit dem Radius R₂ nachgebildet. R₁ und R₂ können sich entsprechen, es kann aber auch ein anderer, insbesondere größerer Radius R₂ gewählt werden.

In Fig. 3 ist eine weitere Ausgestaltung gezeigt, bei der der sphärische Abschnitt durch eine Dachform 20 ersetzt wurde. Auch hier wird durch die Anschlagswirkung an den Abschnitten 21, 23 bzw. 22, 24 eine Pendelbewegung des Lagers verhindert.

Auch bei den in Fig. 2 und 3 dargestellten Ausführungsbeispielen sind an den Umlenkstellen 12' Radien von etwa 3 mm vorgesehen, so daß die schlauchförmige Dämpfungsauflage 10 beim Einpressen über diese Stellen hinweggeleitet und nicht ins stocken gerät. Gleiches gilt für die Innenkontur 13 des Lagerträgers 5.

In den dargestellten Beispielen ist der Lagerträger 5 Schwingungen ausgesetzt. Diese Schwingungen wirken hauptsächlich radial, ein geringer Anteil aber auch axial. Durch die Anordnung der Dämpfungsschicht 10 zwischen dem Lagerträger 5 und dem äußeren Laufring 4 des Lagers 1 werden die Schwingungen vor Einleitung in das Lager 1 zumindest teilweise gedämpft, wodurch die Laufruhe der Welle 3 erhöht und die Belastung des Lagers 1 verringert wird.

## Patentansprüche

1. Wälzlager (1) zur radialen Lagerung zweier Bauteile (5, 11), aufweisend einen inneren Laufring (2), einen äußeren Laufring (4) und dazwischen liegende Wälzkörper (7), sowie eine Dämpfungsauflage (10) unmittelbar zwischen dem äußeren Laufring (4) und dem Bauteil (5), wobei der Laufring (4) eine dem Bauteil (5) zugewandte Außenfläche (12) und das Bauteil (5) eine dem Laufring (4) zugewandte, der Außenfläche (12) entsprechende Innenfläche (13) aufweist, wobei die Außenfläche (12) dergestalt ist, dass eine Pendelbewegung des Lagers (1) oder des Bauteils (5) unter Verformung der Dämpfungsauflage (10) ausführbar ist, wobei der Spalt zwischen dem Lagerring (4) und dem Bauteil (5) eine konstante Breite hat und durch die Auflage (10) aus elastomerem Werkstoff gefüllt ist und wobei die Dicke der Dämpfungsauflage (10) konstant ist, wobei die Außenfläche (12) das Laufrings (4) und die Innenfläche (13) des Bauteils (5) zumindest. abschnittsweise einen vergrößerten Außendurchmesser aufweisen, **dadurch gekennzeichnet, dass** die Verformung der Dämpfungsauflage (10) höchstens bis zu einem Anschlag des Laufrings (4, 21, 22) an dem Bauteil (5, 23, 24) ausfüberbat ist, dass die Außenfläche (12) und die Innenfläche (13) im Längsschnitt eine in Längsschnitt einen Radius (R) aufweisende Umlenkstelle (12') haben, und dass die Dämpfungsauflage (10) durch einen Einpressvorgang unter Vorspannung steht und daher mittels Reibschluss und angedeuteten Formschluss festgelegt ist.

2. Wälzlager nach Anspruch 1, **dadurch gekennzeichnet, daß** die Fläche (12) zumindest abschnittsweise zwei gegeneinander gerichtete Kegelflächen aufweist.

3. Wälzlager nach Anspruch 1, **dadurch gekennzeichnet, daß** die Fläche (12) zumindest teilweise sphärische Abschnitte (17) aufweist.

4. Wälzlager nach Anspruch 2 bis 3, **dadurch gekennzeichnet, daß** seitlich der Wälzkörper (7) Abdeckscheiben (9) vorgesehen sind, die ein Heraustreten eines Gleitmittels (8) verhindern.

## Claims

1. A rolling bearing (1) for the radial mounting of two components (5, 11), having an inner race (2), an outer race (4) and rolling bodies (7) located between them, and also a damping coating (10) directly between the outer race (4) and the component (5), the race (4) having an outer face (12) facing the component (5) and the component (5) having an inner face (13) facing the race (4) and corresponding to the outer face (12), the outer face (12) being such that a pendulous movement of the bearing (1) or of the component (5) is capable of being executed with deformation of the damping coating (10), the gap between the bearing race (4) and the component (5) having a constant width and being filled by the coating (10) of elastomeric material, and the thickness of the damping coating (10) being constant, the outer face (12) of the race (4) and the inner face (13) of the component (5) having, at least in portions, an enlarged outside diameter, **characterized in that** the deformation of the damping coating (10) is capable of being executed at most up to an abutment of the race (4, 21, 22) against the component (5, 23, 24), **in that** the outer face (12) and the inner face (13) have, in longitudinal section, a deflection point (12') having in longitudinal section a radius (R), and **in that** the damping coating (10) is under prestress as a result of a pressing-in operation and is therefore secured by means of a frictional connection and an indicated form-fitting connection.

2. A rolling bearing according to Claim 1, **characterized in that** the face (12) has, at least in portions, two conical faces directed towards one another.

3. A rolling bearing according to Claim 1, **characterized in that** the face (12) has, at least partially, spherical portions (17).

4. A rolling bearing according to Claim 2 or 3, **characterized in that** cover discs (9), which prevent an escape of lubricant (8), are provided laterally at the rolling bodies (7) .

## Revendications

1. Palier à roulement (1) pour le logement radial de deux pièces (5, 11), présentant un anneau de roulement interne (2), un anneau de roulement externe (4) et des organes de roulement (7) placés entre ces anneaux, ainsi qu'un support d'atténuation (10) directement entre l'anneau de roulement externe (4) et la pièce (5), l'anneau de roulement (4) présentant une surface extérieure (12) tournée vers la pièce (5) et la pièce (5) présentant une surface intérieure (13) tournée vers l'anneau de roulement (4) et correspondant à la surface extérieure (12), la surface extérieure (12) étant telle qu'un mouvement pendulaire du palier (1) ou de la pièce (5) peut être exécuté sous déformation du support d'atténuation (10), que l'écart entre l'anneau de roulement (4) et la pièce (5) a une largeur constante et qu'il est rempli par le support (10) en matériau élastomère et que l'épaisseur du support d'atténuation (10) est constante, la surface extérieure (12) de l'anneau de roulement (4) et la surface intérieure (13) de la pièce (5) présentant un diamètre extérieur agrandi au moins par sections, **caractérisé en ce que** la déformation du support d'atténuation (10), la surface extérieure (12) et la surface intérieure (13) ont en coupe longitudinale un point de déviation présentant un rayon (R) et **en ce que** le support d'atténuation (10) est engagé sous prétension par un processus de pression et qu'il est donc fixé par friction et par adhérence insinuée.

2. Palier à roulement selon la revendication 1, **caractérisé en ce que** la surface (12) présente, au moins par sections, deux surfaces coniques dirigées l'une contre l'autre.

3. Palier à roulement selon la revendication 1, **caractérisé en ce que** la surface (12) présente, au moins en partie, des sections sphériques (17).

4. Palier à roulement selon les revendications 2 à 3, **caractérisé en ce que** des rondelles de recouvrement (9) sont prévues sur le côté des organes de roulement (7), ces rondelles de recouvrement empêchant la sortie d'un lubrifiant (8).
